# FASCICULE DE BREVET EUROPEEN

(11) **EP 3 741 505 B1**
(45) Date de publication et mention de la délivrance du brevet: **16.02.2022**
(21) Numéro de dépôt: 20174280.6
(22) Date de dépôt: 12.05.2020
(51) Int. Cl.: F16K 31/06

(54) **PALETTE AUTONOME**
AUTONOME PALETTE
AUTONOMOUS PALLET

(30) Priorité: 13.05.2019 FR 1904945
(43) Date de publication de la demande: 25.11.2020
(73) Titulaire: Automatisation et Controle du Serrage, 89100 Villeroy (FR)
(72) Inventeur: CASSET, Dominique, 89150 BRANNAY (FR)
(74) Mandataire: Oudin, Stéphane

(56) Documents cités:
- EP-A1- 0 149 375
- EP-A1- 1 598 306
- DE-U1-202006 003 402
- DE-U1-202012 001 540

## Description

### Domaine technique de l'invention

La présente invention se rapporte au domaine général du bridage de pièce à usiner. Elle vise plus précisément un dispositif porte-pièce autonome, nommé ci-après palette autonome, destiné à assurer le bridage d'une pièce en vue de son usinage.

### Etat de la technique

Dans le domaine du bridage de pièce à usiner, il est connu d'utiliser des palettes porte-pièce pourvues de moyens de fixation par serrage, bridage ou analogue de ladite pièce par l'intermédiaire de vérins à fluide comprimé incorporés à ladite palette, et alimentées par un générateur de pression de fluide actionné par une source de puissance.

De manière classique, dans toutes les palettes porte-pièce connues, le générateur de pression de fluide ainsi que la source de puissance sont disposés à l'écart de la palette porte-pièce et même dans certains cas à l'extérieur de l'ensemble d'usinage. Le générateur de pression de fluide alimente les moyens de fixation par des flexibles reliant le générateur de pression aux moyens de fixation. Ces solutions connues présentent donc l'inconvénient majeur d'un encombrement de l'espace par le passage des flexibles qui peuvent être détériorés ou coupés par inadvertance.

D'autre part, la disposition séparée du générateur de pression de fluide et de la source de puissance augmente l'encombrement de l'ensemble d'usinage.

Par ailleurs, les systèmes de commande connus pour les dispositifs porte-pièce à usiner utilisent des voies de transmission d'ordre ou de commande provenant d'un dispositif de commande extérieur, qui sont formées par des liens physiques tels que des fils ou câbles électriques. On comprend aisément que la présence de tels fils ou câbles est gênante, surtout quand le nombre des dispositifs porte-pièce est relativement important.

De plus, la diminution ou augmentation de pression au niveau des vérins pour les maintenir à une pression donnée est, de manière classique, assurée par une électrovanne proportionnelle qui est particulièrement encombrante et onéreuse. Enfin, les palettes porte-pièce connues ne permettent pas de garantir le parfait positionnement et/ou bridage de la pièce à usiner sur lesdites palettes.

EP0149375 A1 divulgue une palette autonome selon le préambule de la revendication 1.

### Résumé de l'invention

Le but de la présente invention est de proposer une alternative aux palettes porte-pièce connues étant autonome, compacte, fiable, précise tout en garantissant le parfait positionnement et/ou bridage de la pièce à usiner et en limitant le nombre de flexibles et/ou câbles.

Conformément à l'invention, il est donc proposé une palette autonome pour positionner et brider une pièce à usiner sur une machine-outil, comportant des organes de fixation pour le positionnement et le bridage de ladite pièce à usiner, ladite palette autonome comprenant au moins :
- des équipements embarqués pour la mise en mouvement, de façon programmable, desdits organes de fixation, et
- une pluralité de sorties hydrauliques permettant d'acheminer un fluide sous pression vers ou depuis les organes de fixation, lesdits équipements comportant au moins :
- un dispositif de mise sous pression du fluide,,
- une source d'énergie électrique,
- une pluralité d'électrovannes de distribution dudit fluide sous pression composée pour moitié d'électrovannes de bridage et pour moitié d'électrovannes de débridage, de sorte que chaque sortie hydraulique est associée à une électrovanne de bridage, une électrovannes de débridage et un capteur de pression hydraulique, et
- des moyens de commande et de gestion de la mise en mouvement desdits organes de fixation,
ladite palette autonome étant remarquable en ce que lesdits équipements comportent en outre au moins un capteur de vibration et/ou un dispositif de contrôle du positionnement de la pièce sur la palette autonome comprenant au moins une entrée d'air comprimé à une pression p prédéterminée, une conduite aménagée dans la palette autonome et reliant ladite entrée d'air comprimé à un plan de pose PP sur la palette autonome de la pièce P, et un capteur de pression associé à ladite conduite, et en ce que chaque électrovanne de débridage comporte une bobine, un noyau, un poussoir, une biellette et une bille associée audit poussoir, et est configurée pour qu'en transmettant un faible courant modulé à sa bobine, elle transmette à son noyau une vibration qu'il va lui-même communiquer au poussoir par l'intermédiaire de la biellette, ladite vibration engendrant un léger décalage de la bille de son siège et générant une micro fuite de fluide.

Ledit dispositif de mise sous pression est une pompe oléopneumatique associée à un réservoir de fluide, ou une microcentrale hydraulique avec réservoir d'huile pilotée par un moteur.

La source d'énergie électrique est de préférence du type batterie rechargeable soit sans contact par induction, soit par contact mécanique.

Les sorties hydrauliques se présentent avantageusement sous la forme de modules de quatre sorties hydrauliques.

De manière avantageuse, lesdits moyens de commande et de gestion comprennent au moins des cartes électroniques, à savoir au moins une carte mère et une carte fille pour piloter chacun des modules de quatre sorties hydrauliques.

Selon un mode de réalisation préféré, sur la carte mère est au moins connecté :
- chaque carte fille,
- l'arrivée du chargeur avec ou sans contact de la source d'énergie électrique,
- une carte de communication sans fil,
- un interrupteur d'arrêt d'urgence, et
- une carte mémoire contenant notamment un programme de bridage/débridage de la pièce à usiner.

De même, sur chaque carte fille sont au moins connectés :
- quatre électrovannes de bridage,
- quatre électrovannes de débridage,
- deux capteurs de pression pneumatique permettant de contrôler les fuites d'air, et
- quatre détecteurs de position associés aux organes de fixation permettant de vérifier leurs positions.

### Brève description des figures

D'autres avantages et caractéristiques ressortiront mieux de la description qui va suivre d'un mode d'exécution de l'invention en référence aux figures annexées sur lesquelles :
[Fig 1] est une vue en perspective éclatée d'une palette autonome selon l'invention,
[Fig 2] est une vue en perspective éclatée partielle de la palette autonome de la figure 1 selon un autre angle de vue,
[Fig 3] est une vue schématique de palette autonome selon l'invention dans une configuration sur une machine-outil mono-palette,
[Fig 4] est une vue schématique de palette autonome selon l'invention dans une configuration sur une machine-outil bi-palette,
[Fig 5] est une vue schématique de palette autonome selon l'invention dans une configuration sur une machine-outil multi-palette,
[Fig 6] est une vue schématique du dispositif de régulation de la pression de la palette autonome selon l'invention,
[Fig 7] est une vue schématique du dispositif de contrôle de la position d'une pièce sur la palette autonome selon l'invention, lorsque la pièce est bien positionnée,
[Fig 8] est une vue schématique du dispositif de contrôle de la position d'une pièce sur la palette autonome selon l'invention, lorsque la pièce est mal positionnée,
[Fig 9] est un schéma hydraulique de la palette autonome selon l'invention avec trois modules,
[Fig 10] est une vue schématique de l'implantation des cartes électroniques de la palette autonome selon l'invention avec trois modules.

### Description des modes de réalisation

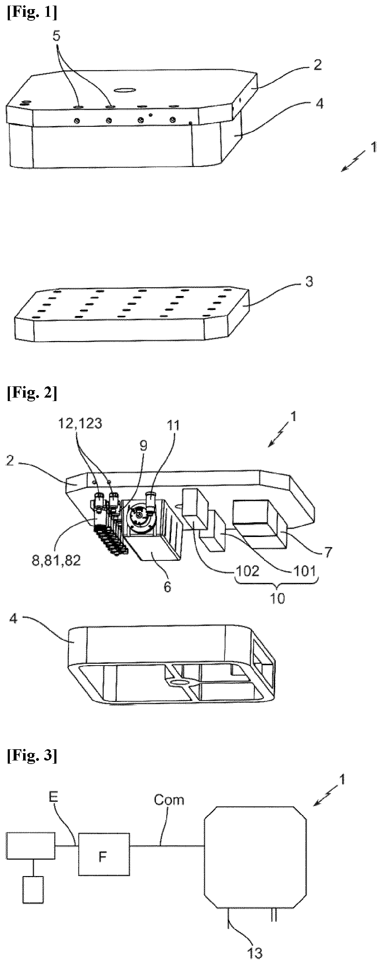

Sur les figures 1 à 10, on a représenté une palette porte-pièce autonome selon l'invention, nommée ci-après palette autonome 1, permettant de garantir le parfait positionnement et bridage d'une pièce à usiner sur une machine-outil telle que, par exemple, un centre d'usinage à commande numérique, un tour à commande numérique ou encore un robot de soudage, pour des fabrications spécifiques en moyenne et grande série. Pour des soucis de clarté, la pièce à usiner et la machine-outil ne sont pas représentées sur les figures.

Pour cela, en référence aux figures 1 et 2, la palette autonome 1 comporte avantageusement :
- une plaque support 2 recevant sur sa face supérieure 21 des organes de fixation, non représentés, tels que, par exemple, des vérins de serrage, pour le positionnement et le bridage de ladite pièce à usiner, et sur sa face inférieure 22 des équipements embarqués nécessaires à la mise en mouvement, de façon programmable, desdits organes de fixation,
- une plaque machine 3 agencée pour être en contact avec la machine-outil, et
- une entretoise 4 de liaison disposée entre la plaque support 2 et la plaque machine 3 et faisant office de carter de protection des équipements solidaires de la face inférieure de la plaque support 2.

On désigne ici par "embarqués" des équipements qui sont solidaires de la palette autonome 1 et qui de fait se déplacent avec elle.

De même, on entend ici par "organes de fixation" des organes pour le serrage, le bridage, le positionnement ou analogue de la pièce à usiner.

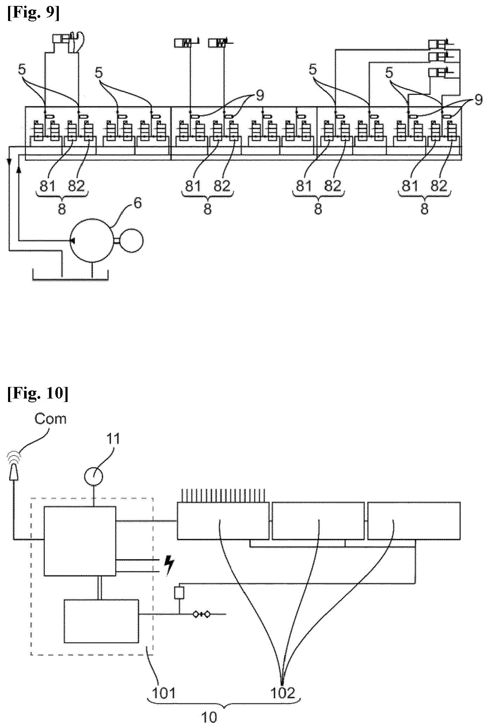

Ladite plaque support 2 comprend au moins une pluralité de sorties hydrauliques 5 permettant notamment d'acheminer à l'aide classiquement de flexibles non représentés du fluide sous pression vers ou depuis les organes de fixation, et étant sous la forme d'orifices traversant ladite plaque support 2. De manière avantageuse, lesdites sorties hydrauliques 5 se présentent sous la forme d'un multiple de quatre sorties hydrauliques 5, appelé ci-après module. Cette configuration présente l'avantage de pouvoir, au bridage de la pièce, piloter trois vérins double effet à des pressions différentes et, au débridage de la pièce, débrider les trois vérins simultanément (Cf. figure 9 module de droite).

Il va de soi que selon la forme de la pièce à usiner et de la position des organes de fixation, les termes "face supérieure" et "face inférieure" seront à adapter. De même, la configuration de la palette autonome 1 décrite ci-dessus, avec une plaque support 2, une plaque machine 3, et une entretoise 4 de liaison, pourra être d'un tout autre type sans sortir du cadre de la présente invention.

Lesdits équipements comportent au moins :
- un dispositif de mise sous pression 6 d'un fluide, avantageusement de l'huile,
- une source d'énergie électrique 7,
- une pluralité d'électrovannes 8 de distribution dudit fluide, composée pour moitié d'électrovannes de bridage 81 et pour moitié d'électrovannes de débridage 82, de sorte que chaque sortie hydraulique 5 est associée à une électrovanne de bridage 81 et à une électrovannes de débridage 82, mais également à un capteur de pression hydraulique 9, et
- des moyens de commande et de gestion 10 de la mise en mouvement desdits organes de fixation comprenant au moins des cartes électroniques 101,102.

Selon un mode de réalisation avantageux, lesdits équipements comportent également au moins un capteur de vibration 11 et, le cas échéant, un dispositif de contrôle 12 du positionnement de la pièce sur la palette autonome 1.

Ledit dispositif de mise sous pression 6 du fluide peut être de plusieurs types. Ainsi, ledit dispositif de mise sous pression 6 pourra, par exemple, être :
- une pompe oléopneumatique associée à un réservoir de fluide,
- une microcentrale hydraulique avec réservoir d'huile pilotée par un moteur électrique, ou encore
- une microcentrale hydraulique avec réservoir d'huile pilotée par un moteur pneumatique.

Dans l'hypothèse du premier type, la plaque support 2 comportera au moins un connecteur pneumatique 13 apte à se connecter à un réseau d'air comprimé et permettant d'acheminer à l'aide de flexibles non représentés de l'air comprimé vers ou depuis la pompe oléopneumatique et de contrôler la pression de l'air à l'aide d'au moins un capteur de pression pneumatique non représenté.

Pour les deux derniers types, on pourra se référer utilement à la demande de brevet français FR 19/00043 déposée au nom de la demanderesse.

Ladite source d'énergie électrique 7 est avantageusement du type batterie rechargeable soit sans contact par induction, soit par contact mécanique par l'intermédiaire, par exemple, de lames ressorts.

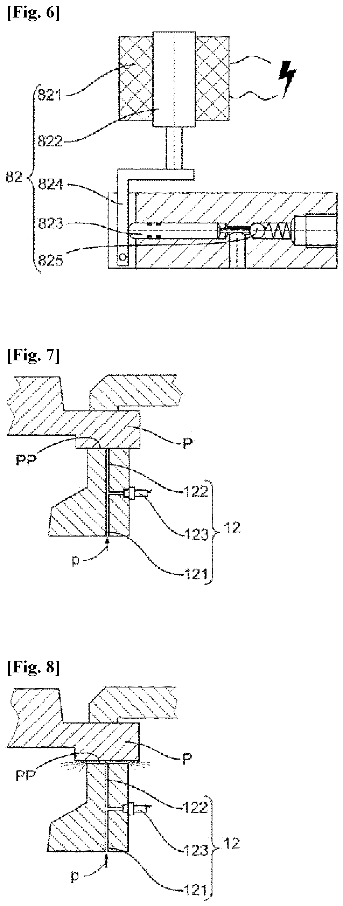

En référence à la figure 6, chaque électrovanne de débridage 82 est configurée pour qu'en transmettant un faible courant modulé à sa bobine 821, elle transmette à son noyau 822 une vibration qu'il va lui-même communiquer au poussoir 823 par l'intermédiaire d'une biellette 824. Cette vibration engendre un léger décalage de la bille 825 de son siège. Ceci occasionne une micro fuite de fluide avec retour d'huile vers le réservoir et donc une baisse de pression. Cette configuration permet donc de calibrer la pression de bridage sans avoir recours à une électrovanne proportionnelle particulièrement encombrante. Ces électrovannes de débridages 82 contribuent alors à la compacité de la palette autonome 1 selon l'invention.

De même, en référence aux figures 7 et 8, le dispositif de contrôle 12 du positionnement de la pièce P sur la palette autonome 1 comporte au moins une entrée 121 d'air comprimé à une pression p prédéterminée telle que, par exemple, 2 bars, une conduite 122 aménagée dans la plaque support 2 de la palette autonome 1 et reliant ladite entrée 121 d'air comprimé à un plan de pose PP de la pièce P, et un capteur de pression 123 associé à ladite conduite 122. Ainsi, si le capteur de pression 123 mesure une pression égale à la pression p prédéterminée, cela signifie qu'il n'y a pas de fuite d'air au niveau du contact entre la pièce P et le plan de pose PP et que le bridage de ladite pièce P est parfait (Cf. figure 7). Au contraire, si le capteur de pression 123 mesure une pression inférieure à la pression p prédéterminée, cela signifie qu'il y a une fuite d'air au niveau du contact entre la pièce P et le plan de pose PP et qu'il y a un défaut de bridage ou un déplacement de la pièce P lors de l'usinage (Cf. figure 8). Pour éviter tout risque, en cas de mesure de pression non égale à la pression p prédéterminée, la machine-outil est arrêtée par le déclenchement d'une procédure d'arrêt d'urgence. Cette caractéristique est particulièrement intéressante pour garantir la fiabilité de la palette autonome 1 et le parfait positionnement et/ou bridage de la pièce à usiner.

En référence à la figure 10, lesdits moyens de commande et de gestion 10 comprennent au moins des cartes électroniques 101,102, à savoir au moins une carte mère 101 et une carte fille 102 pour piloter chacun des modules de quatre sorties hydrauliques 5. Sur la carte mère 101 est au moins connecté :
- chaque carte fille 102,
- l'arrivée du chargeur avec ou sans contact de la source d'énergie électrique 7,
- une carte de communication sans fil du type, par exemple, Bluetooth^{®}, wifi, ou encore radiofréquence,
- un interrupteur d'arrêt d'urgence, et
- une carte mémoire contenant notamment un programme de bridage/débridage de la pièce à usiner.

Par ailleurs, selon le type de dispositif de mise sous pression 6 du fluide, le moteur électrique pilotant la microcentrale hydraulique avec réservoir d'huile ou le distributeur pneumatique de la pompe du moteur pneumatique pilotant la microcentrale hydraulique avec réservoir d'huile est également connecté sur ladite carte mère 101.

Le programme de bridage/débridage de la pièce à usiner chargé dans la carte mère 101 par l'intermédiaire du poste fixe est composé de trois zones de programmation, à savoir un programme bridage, un programme variation, et un programme débridage. Chaque programme est activé depuis le poste fixe de la zone d'usinage par au moins une entrée spécifique (Cf. ci-après la description des postes fixes) connectée à la carte mère 101 via une communication sans fil.

Les entrées, qui pilotent le programme "bridage" et "débridage", sont actionnées soit manuellement par un opérateur ou soit par un robot de chargement/déchargement des pièces à usiner.

L'entrée associée au programme "variation" est pilotée par le programme d'usinage de la machine, afin soit de dégager un vérin pour faciliter l'usinage, soit de modifier une pression lors des différentes phases d'usinage (pression d'ébauche/pression de finition).

De manière optionnelle, le capteur de vibration 11 sera également connecté à la carte mère 101. Ce capteur de vibration 11 permet de mesurer les vibrations dues à l'usinage après la mise au point du programme d'usinage, lesdites vibrations étant enregistrées dans ladite carte mémoire. Dans le cas de dérives trop importantes desdites vibrations pendant l'usinage, l'opérateur en charge de la machine-outil sera alors averti. Lesdites dérives des vibrations peuvent être dues à des outils usés ou cassés, ou à une dureté pas homogène de la matière des pièces à usiner.

En outre, afin d'obtenir un suivi très précis de l'historique d'usinage de la pièce, la machine-outil pourra également transmettre à la carte mère 101 certaines données telles que, par exemple, les coupures de courant, le nombre de cycle d'utilisation d'un outil, ou encore les casses d'outils.

De même, sur chaque carte fille 102 sont au moins connectés :
- quatre électrovannes de bridage 81,
- quatre électrovannes de débridage 82,
- deux capteurs de pression pneumatique 123 permettant de contrôler les fuites d'air, et
- quatre détecteurs de position associés aux organes de fixation permettant de vérifier leurs positions, afin de s'assurer du bridage ou débridage effectif de la pièce à usiner lors du chargement ou déchargement par un robot, et de surveiller tout débridage intempestif de ladite pièce pendant l'usinage.

Sur les figures 3 à 5, on a représenté plusieurs configurations de machines-outils pouvant accueillir la palette autonome 1 selon l'invention, à savoir respectivement une machine-outil mono-palette, une machine-outil bi-palette et une machine-outil multi-palette.

Ainsi, en référence à la figure 3, la machine-outil mono-palette, qui n'est pas valorisante pour la palette autonome 1 selon l'invention, comporte une seule zone servant à la fois de zone de chargement/déchargement de la pièce à usiner et de zone d'usinage, et comprenant un poste fixe F muni d'au moins une entrée E pour le chargement du programme de bridage/débridage de la pièce à usiner et étant apte à communiquer avec la palette autonome 1. Dans cette configuration particulière et pour des raisons économiques évidentes, la communication Com pourra être filaire sans sortir du cadre de la présente invention.

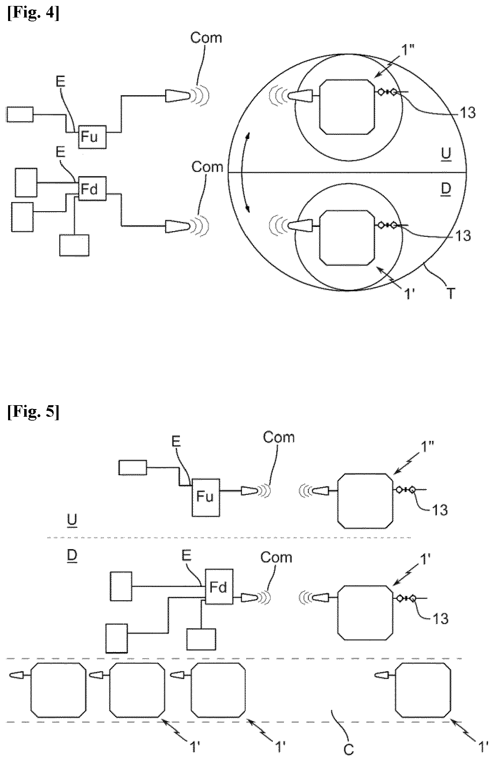

De même, en référence à la figure 4, la machine-outil bi-palette comporte une zone D de chargement/déchargement de la pièce à usiner et une zone U d'usinage, accueillant chacune une palette 1',1" et comprenant chacune un poste fixe Fd,Fu muni d'au moins une entrée pour le chargement du programme de bridage/débridage de la pièce à usiner et étant apte à communiquer avec la palette autonome 1. Les palettes 1', 1" sont de préférence disposées sur un plateau T tournant pour pouvoir passer de la zone D de chargement/déchargement à la zone U d'usinage et inversement.

Enfin, en référence à la figure 5, la machine-outil multi-palette comporte une zone D de chargement/déchargement de la pièce à usiner accueillant chacune une pluralité de palettes 1' et une zone U d'usinage accueillant au moins une palette 1", la zone D de chargement/déchargement et la zone U d'usinage comprenant chacune un poste fixe Fd,Fu muni d'au moins une entrée pour le chargement du programme de bridage/débridage de la pièce à usiner et étant apte à communiquer avec la palette autonome 1', 1" associée. Dans la zone D de chargement/déchargement, les palettes 1' en attente sont avantageusement disposées sur un convoyeur C.

Dans une configuration machine-outil bi-palette ou multi-palette, le poste fixe Fd sera en outre équipé d'au moins :
- une entrée bridage,
- une entrée débridage,
- une sortie défaut bridage,
- une sortie défaut rattrapage pression.

De même, dans les configuration machine-outil bi-palette ou multi-palette, le poste fixe Fu sera en outre équipé d'au moins :
- une entrée variation,
- une sortie acquittement,
- une sortie alarme pour arrêt des avances de la machine.

De manière avantageuse, chaque poste fixe comporte un afficheur indiquant en permanence la pression huile et air des circuits dans la palette autonome 1,1',1". On comprend bien que la surveillante permanente des pressions pendant l'usinage permet, d'une part, avec la surveillance de la pression hydraulique de vérifier si des efforts d'usinage sur des vérins sont trop élevées et, d'autre part, avec la surveillance de la pression pneumatique de contrôler si la pièce bouge pendant l'usinage (Cf. supra). Cette surveillance est réalisable par le biais de la communication, de préférence sans fil, entre chaque poste fixe et la palette autonome 1,1',1".

Par ailleurs, la communication entre chaque poste fixe et la palette autonome 1,1',1" permettra une mise en veille la palette autonome 1,1',1" (c'est-à-dire sans surveillance de pression notamment) si cette dernière n'est pas ou plus en communication avec un poste fixe. En revanche, dans une configuration machine-outil bi-palette ou multi-palette, à chaque arrivée d'une palette autonome 1',1" devant un poste fixe, le poste fixe lui envoie un code qui active la palette autonome 1',1" qui mesure alors notamment les pressions et les transmet audit poste fixe.

On comprend alors tout l'intérêt d'une palette autonome 1,1',1" conforme à l'invention, car cette dernière permet :
- une pluralité de configuration de machine-outil vis-à-vis du type de dispositif de mise sous pression 6 d'un fluide ou du nombre de palettes autonomes 1 et/ou des organes de fixation de la pièce à usiner,
- un contrôle du positionnement de la pièce à usiner au moment du bridage et durant l'usinage,
- un contrôle des vibrations durant l'usinage par le biais d'un capteur de vibration embarqué permettant l'enregistrement du premier usinage et une comparaison avec les usinages suivants,
- une lecture en temps réel des pressions hydrauliques pendant l'usinage
- un contrôle permanent de l'état de charge des batteries,
- la possibilité de stocker un programme d'usinage dans la mémoire de la carte mère 101 embraquée,
- la possibilité d'enregistrer le nombre de pièces usinées par chaque outil, afin de faire une comparaison entre l'usure de l'outil et les variations enregistrées, et
- la possibilité de faire des petites séries avec un changement rapide sans intervention humaine du montage avec un robot.

La palette autonome 1,1',1" selon l'invention trouve une application particulière dans le bridage de pièces à usiner sur une machine-outil à commande numérique pour des fabrications spécifiques en moyenne et grande série.

Enfin, il va de soi que les exemples de palette autonome 1,1',1" conformes à l'invention qui viennent d'être décrits ne sont que des illustrations particulières, en aucun cas limitatives de l'invention.

## Revendications

1. Palette autonome (1,1',1") pour positionner et brider une pièce à usiner sur une machine-outil, comportant des organes de fixation pour le positionnement et le bridage de ladite pièce à usiner, la palette autonome (1,1',1") comprenant au moins :
- des équipements embarqués pour la mise en mouvement, de façon programmable, desdits organes de fixation, et
- une pluralité de sorties hydrauliques (5) permettant d'acheminer un fluide sous pression vers ou depuis les organes de fixation, lesdits équipements comportant au moins :
- un dispositif de mise sous pression (6) du fluide,
- une source d'énergie électrique (7),
- une pluralité d'électrovannes (8) de distribution dudit fluide sous pression composée pour moitié d'électrovannes de bridage (81) et pour moitié d'électrovannes de débridage (82), de sorte que chaque sortie hydraulique (5) est associée à une électrovanne de bridage (81), une électrovanne de débridage (82) et un capteur de pression hydraulique (9), et
- des moyens de commande et de gestion (10) de la mise en mouvement desdits organes de fixation, ladite palette autonome (1,1',1") étant **caractérisée en ce que** lesdits équipements comportent en outre au moins un capteur de vibration (11) et/ou un dispositif de contrôle (12) du positionnement de la pièce sur la palette autonome (1) comprenant au moins une entrée (121) d'air comprimé à une pression p prédéterminée, une conduite (122) aménagée dans la palette autonome (1) et reliant ladite entrée (121) d'air comprimé à un plan de pose PP sur la palette autonome (1) de la pièce P, et un capteur de pression (123) associé à ladite conduite (122), et **en ce que** chaque électrovanne de débridage (82) comporte une bobine (821), un noyau (822), un poussoir (823), une biellette (824) et une bille (825) associée audit poussoir (823), et est configurée pour qu'en transmettant un faible courant modulé à sa bobine (821), elle transmette à son noyau (822) une vibration qu'il va lui-même communiquer au poussoir (823) par l'intermédiaire de la biellette (824), ladite vibration engendrant un léger décalage de la bille (825) de son siège et générant une micro fuite de fluide.

2. Palette autonome (1,1',1") selon la revendication 1 **caractérisée en ce que** ledit dispositif de mise sous pression (6) est une pompe oléopneumatique associée à un réservoir de fluide, ou une microcentrale hydraulique avec réservoir d'huile pilotée par un moteur.

3. Palette autonome (1,1',1") selon l'une quelconque des revendications 1 ou 2 **caractérisée en ce que** la source d'énergie électrique (7) est du type batterie rechargeable soit sans contact par induction, soit par contact mécanique.

4. Palette autonome (1,1',1") selon l'une quelconque des revendications 1 à 3 **caractérisée en ce que** les sorties hydrauliques (5) se présentent sous la forme de modules de quatre sorties hydrauliques (5).

5. Palette autonome (1,1',1") selon la revendication 4 **caractérisée en ce que** lesdits moyens de commande et de gestion (10) comprennent au moins des cartes électroniques (101,102), à savoir au moins une carte mère (101) et une carte fille (102) pour piloter chacun des modules de quatre sorties hydrauliques (5).

6. Palette autonome (1,1',1") selon la revendication 5 **caractérisée en ce que** sur la carte mère (101) est au moins connecté :
- chaque carte fille (102),
- l'arrivée du chargeur avec ou sans contact de la source d'énergie électrique (7),
- une carte de communication sans fil,
- un interrupteur d'arrêt d'urgence, et
- une carte mémoire contenant notamment un programme de bridage/débridage de la pièce à usiner.

7. Palette autonome (1,1',1") selon l'une quelconque des revendications 5 ou 6 **caractérisée en ce que** sur chaque carte fille (102) sont au moins connectés :
- quatre électrovannes de bridage (81),
- quatre électrovannes de débridage (82),
- deux capteurs de pression pneumatique (123) permettant de contrôler les fuites d'air, et
- quatre détecteurs de position associés aux organes de fixation permettant de vérifier leurs positions.

## Patentansprüche

1. Autonome Palette (1, 1', 1") zum Positionieren und Spannen eines Werkstücks auf einer Werkzeugmaschine, umfassend Befestigungselemente zum Positionieren und Spannen eines Werkstücks, wobei die autonome Palette (1, 1',1") wenigstens umfasst:
- eingebettete Einrichtungen für die programmierbare Inbewegungsetzung der Befestigungselemente und
- eine Vielzahl von hydraulischen Ausgängen (5), die es ermöglichen, ein druckbeaufschlagtes Fluid zu den Befestigungselementen hin oder von diesen weg zu befördern,
wobei die Einrichtungen wenigstens umfassen:
- eine Vorrichtung zur Druckbeaufschlagung (6) des Fluids,
- eine elektrische Energiequelle (7),
- eine Vielzahl von Magnetventilen (8) zur Verteilung des druckbeaufschlagten Fluids, bestehend zur Hälfte aus Magnetventilen zum Spannen (81) und zur Hälfte aus Magnetventilen zum Entspannen (82), sodass jeder hydraulische Ausgang (5) einem Magnetventil zum Spannen (81), einem Magnetventil zum Entspannen (82) und einem hydraulischen Drucksensor (9) zugeordnet ist, und
- Mittel zum Steuern und Verwalten (10) der Inbewegungsetzung der Befestigungselemente,
wobei die autonome Palette (1, 1', 1") **dadurch gekennzeichnet ist, dass** die Einrichtungen weiter wenigstens einen Schwingungssensor (11) und/oder eine Vorrichtung zur Kontrolle (12) der Positionierung des Stücks auf der autonomen Palette (1) umfassen, die wenigstens einen Drucklufteingang (121) mit einem vorbestimmten Druck p, eine Leitung (122), die in der autonomen Palette (1) eingerichtet ist und den Drucklufteingang (121) mit einer Legeebene PP auf der autonomen Palette (1) des Stücks P verbindet, und einen Drucksensor (123) umfasst, welcher der Leitung (122) zugeordnet ist, und **dadurch, dass** jedes Magnetventil zum Entspannen (82) eine Spule (821), einen Kern (822), einen Stößel (823), ein Gestänge (824) und eine Kugel (825) umfasst, die dem Stößel (823) zugeordnet ist, und so ausgestaltet ist, dass es, indem ein schwacher modulierter Strom an seine Spule (821) übertragen wird, an seinen Kern (822) eine Schwingung überträgt, die er selbst an den Stößel (823) über das Gestänge (824) weitergibt, wobei die Schwingung einen leichten Versatz der Kugel (825) von ihrem Sitz hervorruft und einen Mikroaustritt von Fluid erzeugt.

2. Autonome Palette (1, 1', 1") nach Anspruch 1, **dadurch gekennzeichnet, dass** die Vorrichtung zur Druckbeaufschlagung (6) eine hydropneumatische Pumpe ist, die einem Fluidbehälter zugeordnet ist, oder ein hydraulisches Kleinkraftwerk mit einem motorgesteuerten Ölbehälter.

3. Autonome Palette (1, 1', 1") nach einem der Ansprüche 1 oder 2, **dadurch gekennzeichnet, dass** die elektrische Energiequelle (7) von der Art einer wiederaufladbaren Batterie entweder ohne Kontakt durch Induktion oder durch mechanischen Kontakt ist.

4. Autonome Palette (1, 1', 1") nach einem der Ansprüche 1 bis 3, **dadurch gekennzeichnet, dass** sich die hydraulischen Ausgänge (5) in Form von Modulen mit vier hydraulischen Ausgängen (5) darstellen.

5. Autonome Palette (1, 1', 1") nach Anspruch 4, **dadurch gekennzeichnet, dass** die Mittel zum Steuern und Verwalten (10) wenigstens elektronische Karten (101, 102) umfassen, nämlich wenigstens eine Mutterkarte (101) und eine Tochterkarte (102), um jedes der Module mit vier hydraulischen Ausgängen (5) zu steuern.

6. Autonome Palette (1, 1', 1") nach Anspruch 5, **dadurch gekennzeichnet, dass** auf der Mutterkarte (101) wenigstens angeschlossen ist:
- jede Tochterkarte (102),
- die Zuleitung des Ladegeräts mit oder ohne Kontakt der elektrischen Energiequelle (7),
- eine Karte zur drahtlosen Kommunikation,
- ein Not-Aus-Schalter und
- eine Speicherkarte, die insbesondere ein Programm zum Spannen/Entspannen des Werkstücks enthält.

7. Autonome Palette (1, 1', 1") nach einem der Ansprüche 5 oder 6, **dadurch gekennzeichnet, dass** auf jeder Tochterkarte (102) wenigstens angeschlossen sind:
- vier Magnetventile zum Spannen (81),
- vier Magnetventile zum Entspannen (82),
- zwei pneumatische Drucksensoren (123), die ein Kontrollieren der Luftaustritte ermöglichen,
- vier Positionssensoren, die den Befestigungselementen zugeordnet sind und ein Überprüfen ihrer Positionen ermöglichen.

## Claims

1. An autonomous pallet (1, 1', 1'') for positioning and clamping a part to be machined on a machine tool, including fastening members for the positioning and clamping of said part to be machined, the autonomous pallet (1, 1', 1'') comprising at least:
- embedded equipment for moving said fastening members in a programmable manner, and
- a plurality of hydraulic outlets (5) allowing to convey a pressurised fluid towards or from the fastening members,
said equipment including at least:
- a device for pressurising (6) the fluid,
- an electrical energy source (7),
- a plurality of solenoid-valves (8) for dispensing said pressurised fluid composed, for one half, by clamping solenoid-valves (81) and, for one half, by unclamping solenoid-valves (82), so that each hydraulic outlet (5) is associated to a clamping solenoid-valve (81), an unclamping solenoid-valve (82) and a hydraulic pressure sensor (9), and
- means for controlling and managing (10) the movement of said fastening members,
said autonomous pallet (1, 1', 1'') being **characterised in that** said equipment further include at least a vibration sensor (11) and/or a device for monitoring (12) the positioning of the part on the autonomous pallet (1) comprising at least one compressed air inlet (121) at a predetermined pressure p, a pipe (122) arranged in the autonomous pallet (1) and connecting said compressed air inlet (121) to a plane PP for setting the part P on the autonomous pallet (1), and a pressure sensor (123) associated to said pipe (122), and **in that** each unclamping solenoid-valve (82) includes a coil (821), a core (822), a pusher (823), a connecting rod (824) and a ball (825) associated to said pusher (823), and is configured so that by transmitting a low modulated current to its coil (821), it transmits to its core (822) a vibration that it will, in turn, communicate to the pusher (823) through the connecting rod (824), said vibration causing a slight shift of the ball (825) off its seat and generating a fluid micro-leakage.

2. The autonomous pallet (1, 1', 1'') according to claim 1, **characterised in that** said pressurisation device (6) is an oleopneumatic pump associated to a fluid tank, or a hydraulic micro-station with an oil tank driven by a motor.

3. The autonomous pallet (1, 1', 1'') according to any one of claims 1 or 2, **characterised in that** the electrical energy source (7) is of the battery type rechargeable either in a contactless manner by induction, or by mechanical contact.

4. The autonomous pallet (1, 1', 1'') according to any one of claims 1 to 3, **characterised in that** the hydraulic outlets (5) are in the form of modules with four hydraulic outlets (5).

5. The autonomous pallet (1, 1', 1'') according to claim 4, **characterised in that** said control and management means (10) comprise at least electronic boards (101, 102), namely at least one motherboard (101) and one daughterboard (102) to drive each of the modules with four hydraulic outlets (5).

6. The autonomous pallet (1, 1', 1'') according to claim 5, **characterised in that** on the motherboard (101) are connected at least:
- each daughterboard (102),
- the connection of the contact or contactless charger of the electrical energy source (7),
- a wireless communication board,
- an emergency stop switch, and
- a memory card containing in particular a program for clamping/unclamping the part to be machined.

7. The autonomous pallet (1, 1', 1'') according to any one of claims 5 or 6, **characterised in that** on each daughterboard (102) are connected at least:
- four clamping solenoid-valves (81),
- four unclamping solenoid-valves (82),
- two pneumatic pressure sensors (123) allowing to monitor air leakages,
- four position detectors associated to the fastening members allowing to check their positions.
